# EUROPEAN PATENT SPECIFICATION

(11) **EP 1 540 684 B1**
(45) Date of publication and mention of the grant of the patent: **25.07.2007**
(21) Application number: 03752170.5
(22) Date of filing: 09.09.2003
(51) Int. Cl.: H01H 13/70, G06F 3/023

(54) **KEYBOARD IMPROVEMENTS**
TASTATURVERBESSERUNGEN
PERFECTIONNEMENTS APPORTES AUX CLAVIERS

(30) Priority: 09.09.2002 US 408973 P; 23.05.2003 US 473358 P
(43) Date of publication of application: 15.06.2005
(73) Proprietor: Digit Wireless, LLC, Cambridge, MA 02140 (US)
(72) Inventor: LEVY, David, H., Cambridge, MA 02140 (US)
(74) Representative: Müller-Boré & Partner Patentanwälte
(86) International application number: PCT/US2003/028307
(87) International publication number: WO 2004/023504

(56) References cited:
- WO-A-01/95358

## Description

### TECHNICAL FIELD

This invention relates to keyboards and keypads in general, and more specifically to keyboards and keypads with raised and recessed key regions.

### BACKGROUND

As portable electronic devices become more miniaturized, the ergonomic quality and size of their input devices (such as keypads) become a key consideration in their design. International standards have been established, for example, for the minimum dimension between adj acent key switches to accommodate typical human fingertips. By "key" I mean an element, of an array of elements over a surface, which when struck produces an identifying output corresponding to the location of the element. The term "key region" includes, for example, a localized region of a keypad formed by placing a membrane or assemblage of keys over an array of contact switches. A "keypad" is an array of keys or key regions and includes, among other things, a conventional keypad (such as is found on most telephones, calculators and such), and a keyboard.

Some keypads have keys or key regions that are locally raised or elevated with respect to adjacent keys or key regions, with respect to a nominal plane or surface of the keypad. These keys or key regions I call "hill keys," while the key regions that are locally recessed with respect to adjacent hill keys I call "valley keys." Valley key regions may be concave or convex, but in either case their upper, exposed surfaces are notably lower than the upper, exposed surfaces of the adjacent hill keys. In some cases, valley keys are algorithmically associated with adjacent hill keys within the device. By "algorithmically associated" I mean that the response to triggering or pressing on a valley key region is at times intentionally affected by the state of one or more adjacent hill keys. In some cases, this means that the valley key regions have labels corresponding to outputs that are algorithmically associated with the simultaneous or near-simultaneous actuation of the adjacent manipulation of a set of two or more independent key regions. For example, some of my earlier work was directed to IACK (Independent-And-Combination-Key) keypads, in which output keystrokes are determined both from individual switch activation and from the combined activation of adjacent switches. In that context, the hill keys are sometimes referred to as "independent keys" or "independent key regions," whereas the valley keys are called "combination keys" or "combination key regions." In several of my early IACK embodiments, the valley keys were functionally associated with adjacent hill keys in that triggering an output associated with each valley key required the manipulation of a combination of adjacent hill keys, as the valley key region itself had no underlying switch. Further background information on this arrangement can be found in my pending US patent application published as US 2002-005837, filed May 22, 2001.

By "algorithmically associated," as used herein, I mean to also include other associations, such as arrangements in which both valley and hill keys have associated switches, with valley key output generated by either activation of the valley key switch or a combination of adjacent hill key switches, and arrangements in which the activation of both a valley key switch and an adjacent hill key switch results in only an output associated with the valley key switch (overriding the hill key input, in a sense, if the hill key is determined to be adjacent the valley key). Further background information on this latter arrangement can be found in my pending US patent application serial numbers 60/444,227, filed February 3, 2003.

The QWERTY key layout is a recognized standard utilizing ten letters across its width. This standard serves to define the width of many products. Minimizing the width of these ten keys (while maintaining a useful device) is a critical aspect to the miniaturization of hand-held products. An earlier attempt to compress the width of an IACK keypad included rotating the keypad by 45 degrees. The result was to increase the number of keys that fit in a row by a factor of 1.4. While this did increase key width density, it resulted in alternation of hill and valley keys (i.e., "Q" on a hill, "W" in a valley, "E" on a hill, etc). It also created a strong differentiation between the ease-of-use of characters that were ostensibly equal in importance.

Further improvements in the ease of use of IACK-type keypads and other keypads with hill and valley keys are desired.

### SUMMARY

Several aspects of the invention generally feature a keypad defining both exposed valley keys and exposed hill keys elevated above the valley keys.

According to one aspect of the invention, the hill keys have a nominal effective key width substantially equal to a nominal effective key width of the valley keys. "Effective key width" is the distance available to strike a key without accidentally hitting an adjacent key. To measure the effective key width of a given key, measure from the closest edge of a nearest key to its right (or above) not associated with the given key, to the closest edge of a nearest unassociated key to its left (or below). By "nominal" I mean that with respect to the keypad as a whole, the measurement is typical of that type of key.

In many configurations, at least many of the hill keys are each associated with a corresponding hill key, such that adjacent pairs of the hill keys and connecting regions form elongated dual keys.

According to another aspect of the invention, at least many of the hill keys are each functionally associated with a corresponding hill key, with adjacent pairs of the hill keys and connecting regions of the keypad forming elongated dual keys. By "functionally associated" I mean that both hill keys in each pair function, either individually or together, to provide a common signal to a processor, such as by activating a single switch.

Various embodiments of either aspect of the invention feature various combinations of the following characterizations.

In some embodiments, the connecting region is in the form of a locally elevated bridge, such as a bridge that narrows to form a waist between the adjacent hill keys. The bridge preferably slopes downward toward its midpoint to form a saddle between the adjacent hill keys.

Preferably, at least many of the dual keys have left sides and right sides with different identifying labels.

In some constructions, the dual keys overlay electrical traces of a circuit board and are associated with conductive actuators normally spaced apart from the electrical traces and brought into electrical contact with the traces when their associated hill keys are depressed. Preferably, each dual key is associated with only one, elongated actuator, which in some cases has a lower surface curved along its length.

In some arrangements, each dual key is associated with only one, elongated tactile feedback element.

In some cases, at least many dual keys are each associated with a pair of actuators, each of the pair of actuators underlying one of the pair of hill keys of the dual key. For example, both of the actuators of the pair of actuators may be arranged to engage a single electrical trace of the circuit board. Alternatively, each of the actuators of the pair of actuators may be arranged to engage a different electrical trace of the circuit board.

In some cases, at least many dual keys are each associated with a pair of tactile feedback elements, each of the pair of feedback elements underlying one of the pair of hill keys of the dual key.

The valley keys may be arranged in columns, with alternating columns containing dual keys.

In some embodiments, each dual key is configured as a rigid key structure displaceable as a unit with respect to an underlying circuit board. The rigid key structure of each dual key may also span at least one adjacent valley key, with the rigid key structures forming at least several of the dual keys also spanning two adjacent valley keys, one on either side of the dual key.

In some cases, the dual keys are disposed in alternating rows separated by rows of valley keys.

In some embodiments, adjacent pairs of valley keys are structurally linked such that displacing one of the valley keys of the pair of valley keys toward an underlying circuit board displaces the other of the valley keys of the pair of valley keys away from the circuit board. For example, each pair of valley keys may include a lever (in a functional sense, if not a literal sense) spanning the pair of valley keys and pivotable about a pivot point between the spanned valley keys. In some cases, the lever contacts the circuit board, or a snap dome on the circuit board, at the pivot point. Preferably, snap domes beneath such pivot points are configured to provide a higher feedback force than snap domes associated with hill keys.

In some embodiments, the keypad also includes pivotable members each spanning two hill keys of different dual keys, such that displacing one of the spanned hill keys toward an underlying circuit board displaces the other of the spanned hill keys away from the circuit board. Preferably, the pivotable member also spans a valley key.

In some embodiments, the valley keys have convex exposed surfaces.

The valley keys preferably comprise locally elevated regions that are recessed with respect to the hill keys.

Centers of adjacent valley keys are preferably spaced apart by a distance of less than about six millimeters, more preferably by a distance of about 5.4 millimeters.

In at least one preferred arrangement, many hill keys are each associated with at least six valley keys.

In one particularly useful arrangement, the keypad has a row of key labels arranged to read, from left to right, Q-W-E-R-T-Y.

In some embodiments, the hill keys provide a corresponding output when individually pressed, and wherein the valley keys are labeled to correspond with an output that results at least from the simultaneous or near-simultaneous manipulation of a predetermined set of two or more hill keys adjacent the valley key.

In some cases, only the hill keys provide an electrical response when actuated, the outputs corresponding to labels of the valley keys being derived only from combinations of electrical responses from actuation of adjacent hill keys.

In some preferred keypads, the valley keys are algorithmically associated with adjacent hill keys. For example, key output may be determined both from individual switch activation and from combined activation of adjacent switches.

According to another aspect of the invention, an electronic device includes the above-described keypad, with the hill keys each providing a corresponding output when individually pressed, and in which the valley keys each provide an output that overrides any simultaneous or near-simultaneous manipulation of any one hill key adjacent the valley key.

Another aspect of the invention broadly features a keypad, not necessarily of IACK-type, having an array of keys (or key regions of a flexible surface) displaceable toward an underlying circuit board, wherein adjacent pairs of keys or key regions are structurally linked by a structure that contacts the circuit board between the linked keys or key regions to define a pivot point, such that displacing one of the linked keys or key regions toward the circuit board lifts the other linked key or key region of the pair away from the circuit board.

In some embodiments, at least many keys or key regions are operatively linked in this manner to two different keys or key regions, such that displacing one of these double-linked keys or key regions toward the circuit board lifts the two keys or key regions to which it is so linked. Preferably, the linked keys or key regions are disposed adjacent one another within the array of keys. Lifting keys or key regions adjacent a key or key region being depressed can help to avoid cross-talk between adjacent keys in keypads with particularly close keys, in the sense of eliminating undesired actuation of adjacent keys.

Various aspects of the invention can provide improved ease-of-use of keypads, particularly with IACK-type devices, such as by providing a more balanced effective key width between hill and valley keys. Several features disclosed herein are believed to be provide particularly useful in elongated key arrays, such as those containing a standard QWERTY arrangement of keys.

The details of one or more embodiments of the invention are set forth in the accompanying drawings and the description below. Other features, objects, and advantages of the invention will be apparent from the description and drawings, and from the claims.

### DESCRIPTION OF DRAWINGS

Figure 1 is a plan view of a prior art IACK keypad.
Figures 2A and 2B are cross-sectional views of the keypad of Figure 1, shown with an actuating finger placed directly above a hill key and a valley key, respectively.
Figure 3 shows an embodiment of an improved IACK keypad, with a field of dual keys.
Figures 4A and 4B are cross-sectional views of the keypad of Figure 3, shown with an actuating finger placed directly above a dual key and a valley key, respectively
Figure 5 shows the keypad of Figure 3, labeled with a QWERTY key arrangement.
Figure 6 is a cross-sectional view taken along line 6-6 in Figure 5, through an embodiment with single-wide actuators and dual-wide switches.
Figure 7 is a cross-sectional view taken along line 7-7 in Figure 5, through an embodiment with dual-wide actuators and switches.
Figure 8 is a cross-sectional view taken along line 8-8 in Figure 5, through an embodiment with single-wide actuators and single-wide switches.
Figures 9 and 10 are cross-sectional views taken along lines 9-9 and 10-10, respectively, in Figure 5.
Figure 11 shows a printed circuit board switch arrangement useful with the keypad of Figure 5.
Figure 12 shows the keypad of Figure 3, with some dual keys provided with alternate labels and functions.
Figure 12a is a cross-sectional view taken along line 12a-12a in Figure 12.
Figures 13-15 are cross-sectional views taken along lines 13-13, 14-14 and 15-15, respectively, in Figure 12.
Figure 16 shows an array of snap domes useful with the keypad of Figure 5.
Figure 17 shows another keypad dual key arrangement.
Figures 18a and 18b are cross-sectional views taken along line 18-18 in Figure 17, with the key structure at rest and with key 'P' depressed, respectively.
Figures 19a and 19b are cross-sectional views taken along line 19-19 in Figure 12, with the key structure at rest and with one valley key depressed, respectively.
Figures 20a-20c are cross-sectional views taken along diagonal line 20-20 in Figure 12, with the key structure at rest, with one valley key depressed, and with one hill key depressed, respectively.
Figures 21a-21c show a pivoting linkage spanning two hill keys on either side of a valley key, with a rigid standoff between the keymat and circuit board, below the valley key.

Like reference symbols in the various drawings indicate like elements.

### DETAILED DESCRIPTION

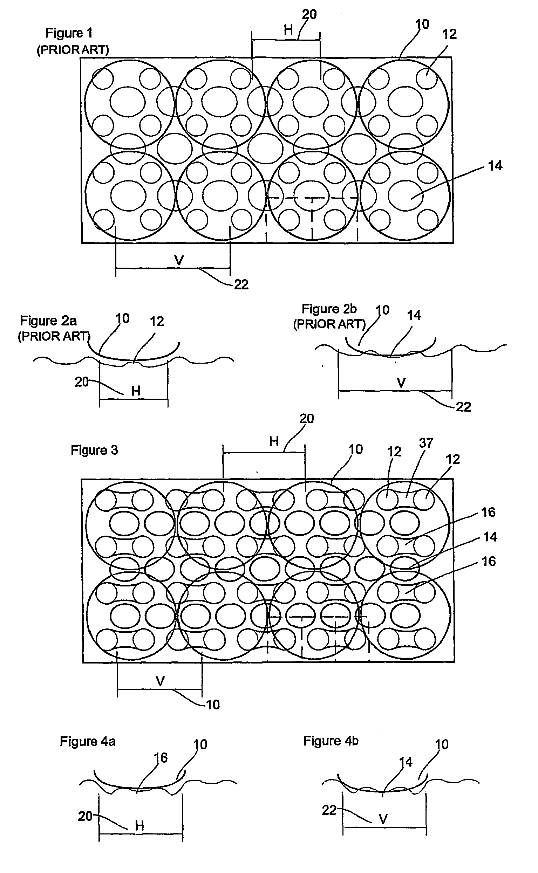

Figure 1 shows a prior art IACK keypad, with superimposed circles 10 each having a diameter corresponding to the contact zone of a typical adult finger. Independent key regions 12 are slightly elevated, and thus called "hill" keys. Combination key regions 14 are slightly depressed (relative to the hill keys) and called "valley keys." The dimension identified by "H" shows effective hill key width 20, and represents the total distance that may be spanned by a finger striking a central hill key 12, without contacting adjacent independent keys. As shown roughly to scale, the prior art keypad of Figure 1 has a nominal effective hill key width 20 of approximately 75 percent of the diameter of a typical finger contact zone. The representative layout provides 8MN-2M-2N+1 1 keys in a keyboard M finger contact zones wide and N finger contact zones high. In the keyboard shown (M=4 and N=2), there are 53 independently actuatable key regions, thirty-two independent (hill) keys 12 and twenty-one combination (valley) keys 14. The number of combination key regions 14 across the width of the device, in one row, is given by 2M-1. Given that actuation of any given valley key can be solely a function of the activation of adjacent hill keys (as discussed in my pending application published as US 2002-005837), the effective combination key width 22 spans the distance between elevated key regions on either side of, and not associated with, the valley key. In the figure, nominal combination key width 22 is denoted as "V" and is approximately 125 percent of the diameter of a finger contact zone 10. The distance between centers of adjacent combination keys, illustrated by the dashed lines representing the underlying contact grid, is approximately 50 percent of the width of the adult human finger contact zone. Figure 2A is a cross-sectional view of the keypad of Figure 1, taken along a row of hill keys 12 and showing an adult finger 10 centered on a selected independent key 12. The effective hill key width 20 is approximately 75 percent of the width of the contact zone of the finger. As a reference, the typical adult human finger is about 15 to 20 millimeters wide. Similarly, Figure 2B shows the same cross-sectional view, with finger 10 centered over a combination key region 14 (i.e., centered between, and out of the plane of, adjacent independent key regions seen in this view). As seen, the effective valley key width 22 is significantly more than the width of the finger. In this sense, the prior IACK keypad of Figure 1 is "imbalanced," in that the combination keys provide an effective key width that is significantly larger than necessary for comfortable operation, while the hill keys are somewhat smaller than they would ideally be to provide comfortable operation for a finger of a given size.

Figure 3 shows an IACK keypad with a field of dual keys 16. In this example, each dual key 16 includes two adjacent hill keys 12 and a connecting bridge 37. From a user's standpoint, certain combination keys 14 are operated by pressing the dual keys 16 above and below the combination key, while other combination keys 14 are operated by pressing the four adjacent dual keys 16 surrounding the combination key. The spacing of the underlying independent key grid has been reduced to approximately one-third the width of the adult human finger, as shown by broken lines. Likewise, the distance between adj acent combination keys 14 is reduced to approximately one-third a finger contact zone width, thereby advantageously increasing the number of combination keys 14 across the width of the device from 2M-1 to 2.5M. The number of keys provided in a keyboard of M by N finger contact zones is 7MN +2N-M-1, approximately 10 percent fewer keys than the IACK keypad of Figure 1. (In the keyboard of Figure 3, M=4 and N=2, resulting in 47 independently actuatable keys, twenty dual keys 16 and twenty-seven combination keys 14.) Figures 4A and 4B show cross-sectional views of the keypad of Figure 3, showing an adult finger 10 centered on a selected independent dual key region 37 and centered on a combination key region, respectively. As will be appreciated from these views, the effective widths of the valley keys and the dual (hill) keys are approximately the same, and are both about equal to the width of the finger.

Comparing the layouts of Figures 1 and 3, the relatively smaller overall key density of Figure 3 can be offset by significant improvements. For example, the layout of Figure 3 is "balanced" in that the value of effective key widths H (20) and V (22) are both approximately equal to the width of a finger contact zone. In this respect, both hill and valley keys are equally easy to use, thereby increasing the overall ease-of-use of the device. Furthermore, by reducing the valley key effective key width to approximately one finger width, the density of easy-to-use (finger-sized) keys can be increased across the width of the keyboard. This can be particularly important when incorporating relatively wide layouts, such as the common QWERTY key arrangement, into pocket-sized and smaller products, without sacrificing key width. With an on-center distance of about 5.4 millimeters (approximately one-third the width of the adult human finger), an entire QWERTY keyboard can fit into a keypad of only 60 millimeters (less than 2.5 inches) in width. An on-center distance of 5.0 millimeters (nearly 25 percent of the width of an adult human finger) reduces the required keyboard width to only 56 millimeters, resulting in an extremely small width for a QWERTY keyboard incorporating easily activated keys.

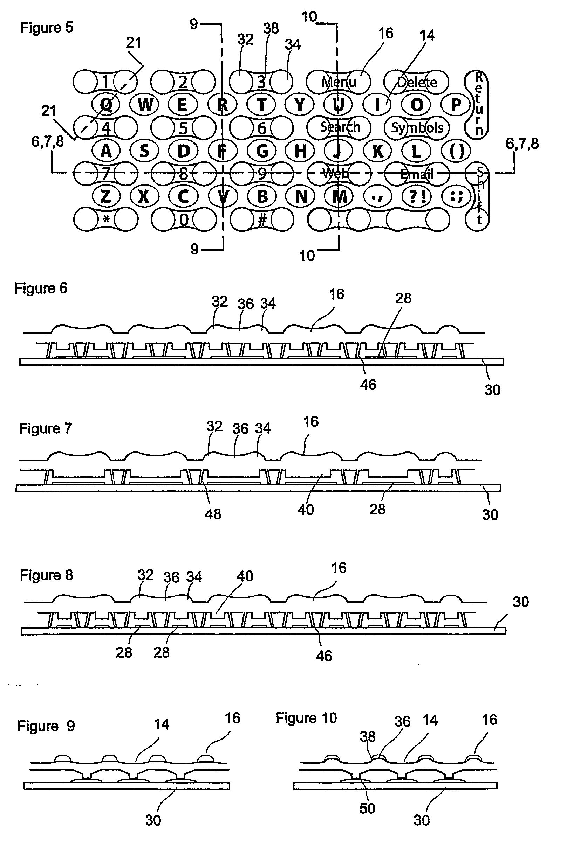

Figure 5 shows a keypad of the design of Figure 3 and containing a QWERTY key arrangement. Each dual key 16 includes a left side 32, a right side 34 and a waist 38 (a narrowed region, as viewed in plan) located between them. Each dual key 16 has a high aspect ratio, allowing each to be used two ways: in adjacent pairs along the long edge and in adjacent sets of four along the short edge. Therefore, some valley key entries are registered in the traditional IACK method of sensing force placed simultaneously on hill keys diagonally opposite adjacent hill keys. For example, to enter the letter "W" the user presses at the center of the associated combination key, pressing at least two diagonally opposite ones of the four adj acent dual keys 16, numbered "1", "2", "4" and "5." However, other valley key inputs are registered by sensing the activation of switches disposed beneath two adjacent hill keys disposed in the same column. For example, to enter the letter "Q" the user naturally centers his finger on the associated valley key, thereby pressing the dual keys 16 numbered "1" and "4." Simultaneously pressing either the left side 32 or right side 34 of the "1" dual key, with either the left side 32 or right side 34 of the "4" dual key, is interpreted as a "Q" entry. Either combination of "2+4" or "1+5" will be entered as "W".

The result is a continuous row of highly dense keys, in which each key in the row has the same character, unlike the prior art attempt at width reduction discussed above, that canted an IACK keypad at 45 degrees and alternated hill and valley keys. The dual keys 16 are operated by pressing on either the left side 32, right side 34 or waist 38 of the dual key. Because the effective key width of hill keys of this embodiment are significantly wider than those of the keypad of Figure 1 (despite the reduction of on-center distance between valley keys) these hill keys are also easier to use. In the IACK keypad of Figure 1, each hill key 12 is associated with at most four adjacent combination keys. In Figure 5, each dual key 16 in the middle dual key rows is associated with six adjacent combination keys. The number "5," for example, is associated with W, E, R, S, D and F. This structure helps maintain overall key density while providing a more balanced design and increasing the width density of combination keys 14.

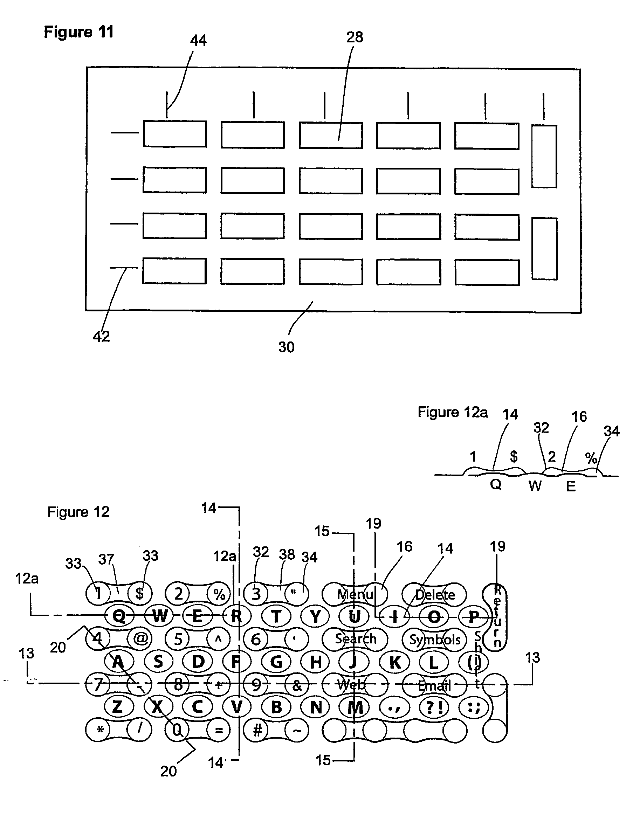

Various underlying switch and feedback element configurations are contemplated. For example, in Figure 6 the hill of each dual key 16 includes a left side 32, a right side 34 and a slightly relieved saddle region 36 between them. Each dual key overlays two rubber dome tactile feedback elements 46 and actuators, one under its left side 32 and the other under its right side 34. However, each dual key 16 corresponds with only one switch 28 on the printed circuit board 30 that underlies both actuators. There is no difference, therefore, between striking the left side 32 of dual switch 16, the right side 34, or both sides simultaneously. The advantages include reducing the number of lines to the processor. Rather than using four rows and 11 columns on the PCB 30, as would be required if each actuator engaged a unique switch, this embodiment uses four rows and six columns, reducing the number of pins required by five, a 50 percent reduction. Figure 11 shows an associated printed circuit board 30 with switches 28 arranged in four electrical rows 42 and six electrical columns 44.

In the example of Figure 7, the left side 32, right side 34 and saddle 36 of each dual key 16 share a common switch actuator 40 and a double-wide rubber dome tactile feedback element 48. In the example of Figure 8, the left side 32 and right side 34 of each dual key each has its own switch actuator 40, its own associated switch 28, and its own rubber dome tactile feedback element 46.

Figure 9 shows a cross-section through Figure 5 with snap domes 50 disposed beneath the combination keys 14 to provide tactile feedback.

Referring to Figure 10, saddle 36 is lower than the adjacent portions of dual key 16. Waist 38 is narrower than the adjacent portions of dual key 16. Recessing the bridge 37 to form a saddle 36, and narrowing the bridge to form a waist 38, provides additional clearance for a finger centered over an adjacent combination key 14.

In the embodiment of Figure 12, the combination keys 14 each have associated switch contacts that are given interpretation priority over the switches of the dual keys 16 so that in the event of a simultaneous operation, the combination key 14 will be selected by the system as the user's intent. The valley key regions 14 are convex, and therefore 'hill-shaped' themselves. However, their height is lower than the left sides 32 and right sides 34 of dual keys 16. To operate the letter "Q," the user presses on the label "Q" at the center of the associated valley key. However, if the user also presses the dual key 16 labeled "1$" and/or the dual key "4@" the system will recognize the combination key 14, "Q," as dominant. Similarly, to operate the letter "W" the user presses on the label "W" of the combination key region. However, if the user also presses edges of dual keys 16 labeled "$", "2", "@" and/or "5" the system will recognize the combination key 14 as dominant, interpreting the input as "W". (These principles are explained in my co-pending provisional patent application 60/444,227.)

Also note in this embodiment that some dual keys 16 include separate labels 33, one the left side 32 and one the right side 34. For example, the upper left dual key is labeled "1" on its left side 32 and "$" on its right side 34. One label may be indicated as dominant, with the input associated with the other label requiring the dual key to be engaged in combination with another key sequence, such as with an "alternate" or "shift" key, and may be printed with different colors to reflect the dominance.

By viewing this cross-section of Figure 12a, it will be appreciated that the keymat topography can help to avoid erroneous input in extremely miniaturized keypads, by providing a physical barrier to contact of adjacent keys during operation. Each left side 32 and right side 34 serve to isolate adjacent valley keys 14 by lifting the flesh at the peripheral edges of the finger. By way of explanation, the figure identifies the characters printed on each structure, as indicated in Figure 12. As an example, when pressing the 'W' key, the portions of the finger that might otherwise contact the 'Q' are held up (away from the 'Q' valley key 14) by the right side 34 labeled with '$' (and the right side 34 labeled '@' of Figure 12). The portions of the finger that might otherwise contact the 'E' are held up (away from the E valley key 14) by the left side 32 labeled with '2' (and the left side 34 labeled '5' of Figure 12). It can likewise be appreciated that in the absence of the dual key structure 16, the flesh of a finger attempting to strike a valley key 14 could accidentally contact an adjacent key.

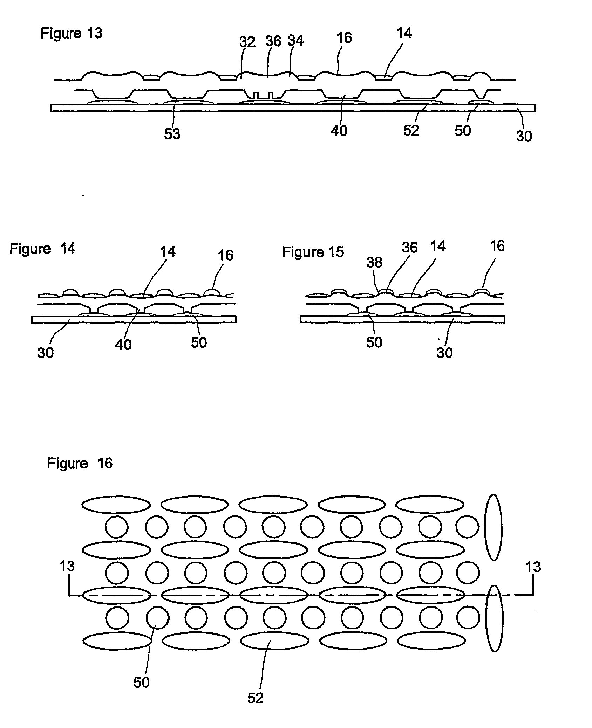

As shown in Figure 13, the switch actuators 40 are centered below, and elongated along the major axis of each dual key 16. It is also helpful to place a slight curvature on the bottom surface 53 of each switch actuator 40 as shown. The actuator 40 at the center of Figure 13 is shown divided into three parts, but performs the same function. An oblong double snap dome 52 (shown in Fig 16) is located below each dual key 16. The cross section of the actuator 40 in the plane of the keyboard may also follow the contour of the double snap dome 52.

Referring next to Figures 14 and 15, snap domes 50 are disposed beneath the combination key regions 14, the upper surfaces of which are convex, as opposed to concave in the embodiment of Figure 5. The upper surfaces of the combination key regions 14 remain recessed with respect to the upper surfaces of the independent key regions 12. However, the convex shape may be preferred in some applications where activation of the left side 32 and right side 34 of an adjacent dual key performs different functions.

Figure 16 shows an array of snap domes 50 and double-wide snap domes 52 for use with any of the above key layouts, in which each elongated snap dome 52 is disposed directly beneath an associated dual key, such that the elongated snap dome provides tactile feedback in response to pressure against either end of the dual key. This prevents two tactile feedback events from occurring in response to actuation of a single dual key.

There are several problems associated with reducing the size of a keypad, such as a QWERTY keypad, to the extent that multiple key switches lay beneath the finger at one time. One problem is that of accurately and transparently guiding the finger to the correct location. In figures 5-13, saddle 36 and the bridge 37 help solve this problem in dual keys 16.

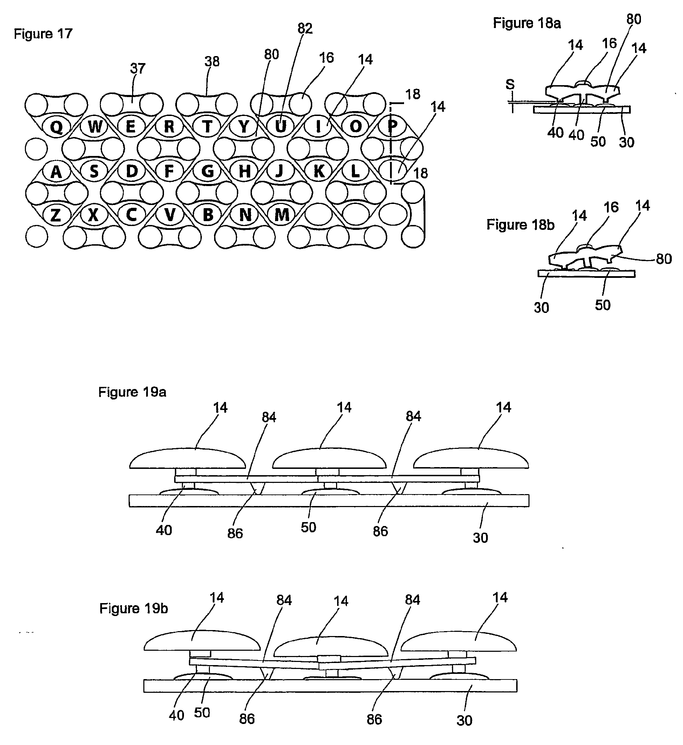

Figure 17 shows a keypad in which the valley keys 14 are each associated with one dual key 16 (and the associated saddle 36 and the bridge 37), as a rigid structure 80. The figure demonstrates how the structure can be presented as a field of diamond-shaped keys 80, with a dual key 16 disposed across its center, and triangular keys 82, with a dual key 16 disposed along one edge. Each diamond key 80 is molded to form both a dual key 16 and two valley keys 14, each disposed on either side of the valley key 14 and located proximate to its center, preferably with longer actuators 40 disposed beneath the dual key 16, as shown in Figure 18a and 18b.

Another problem associated with extreme miniaturization is that of feedback. The goal is to receive a single 'snap' in response to a single key actuation. With multiple tactile feedback elements disposed beneath the finger, this objective is extremely elusive. As shown in Figure 18a, the actuator 40 disposed beneath dual key 16 is slightly longer, at least the stroke of the snap domes 50, as shown by dimension 'S,' or the domes are different heights. In either case, the objective is to allow the diamond key 80 to translate downward such that the snap dome 50 disposed beneath the dual key 16 may actuate without actuating the domes 50 below the valley keys 14. The snap dome 50 beneath the dual keys may be configured to present a higher resistance to deflection. As shown in Figure 18b, the finger rocks diamond key 80, using the central actuator 40 as a pivot point. The higher force level necessary to actuate dome 50 beneath dual key 16 aids this process by preventing actuation of the central dome 50 until the key 80 rocks far enough to actuate the dome 50 under valley key 14. Accidentally striking a nearby dual key 16 is therefore less likely, although software may also account for inadvertent dual key activation by prioritizing valley key input over hill key input, as discussed herein. Therefore, if a dual key 16 is accidentally struck during actuation of a valley key 14, the dual key is ignored. Because dual keys 16 are relatively prominent and easy to strike, such an algorithm in combination with the physical structure (and with the structure of Figures 5-12) can result in a high degree of input accuracy

Another problem associated with extreme miniaturization of a QWERTY keypad is that of distinguishing simultaneous, inadvertent pressing of adjacent keys, such as 'Q' and 'W.' One approach is to address the problem in software, specifically to assume that adjacent presses within extremely short periods of time (double strokes) are accidental and therefore to ignore the second key press. Of course, this can reduce typing speed by requiring the user to slow down input of adjacent keys, such as 'A' followed by 'S,' or 'E' followed by 'R,' common occurrences in English text. Another software approach taken with extremely small QWERTY keypads is to have the device do nothing when two adjacent keys are struck at the same time. Figures 19a and 19b illustrate another solution. Referring first to Figure 19a, a series of overlapping rigid members 84 extend from one valley key 14 to the one adjacent to it, with a pivot point 86 located midway between each, such that when one valley key 14 is pressed, the adjacent key(s) rises, as shown in Figure 19b. Actuators 40 presses against snap domes 50. Pivot point 86 presses against a rigid surface, such as of PCB 30. The ends of adjacent rigid members 84 both underlie a common valley key, the central one in this figure. While members 84 are shown as linear elements independent from the keys, members 84 may also be integral with the keys themselves, such as interlocking integrally molded tiled keys. This approach helps to solve the difficulties of extreme keypad miniaturization, first by not adding a layer of software that intentionally ignores potentially correct input, and second by intruding an analog feedback system that provides scaled tactile feedback to the user, so that her "muscle memory" learns how accurately the finger must be place to actuate a key, instead of simply working or not working.

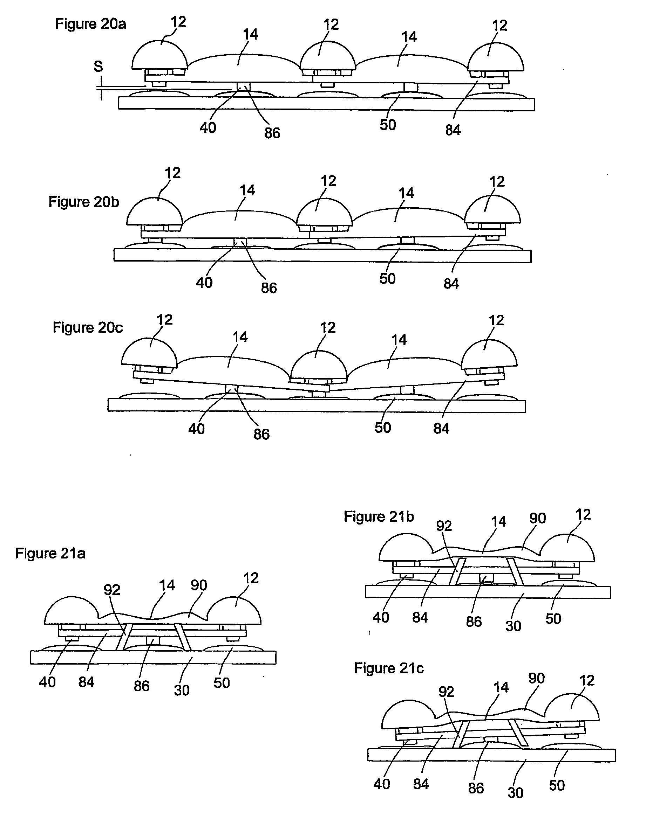

In Figures 20a through 20c, the pivot lever 84 is shown spanning hill keys 12 of adjacent dual keys, with a valley key 14 disposed above each pivot point 86, which rests upon a snap dome 50. The effective stroke length of the actuators 40 disposed beneath hill keys 12 is slightly longer than that of the actuators beneath the valley keys 14, by a dimension 'S.' This allows the structure to translate downward to actuate a valley key 14 (Figure 20b) without actuating the snap domes of either linked hill key 12, and to rotate to actuate hill keys 12 (Figure 20c). While the figure shows member 84 as integrally molded tiles with the keys (similar to the diamond keys of Figure 17), it may also be a separate element as in Figure 19a. As discussed above with respect to Figures 18a and 18b, a higher force snap dome 50 may be used at the pivot point 86 (beneath the valley keys 14 in this case).

Referring next to Figures 21a through 21c, a molded elastomeric sheet 90 provides the visible elements of the keypad shown. The region of the sheet 90 that corresponds with the valley key 14 is held apart from the PCB 30 by a rigid standoff 92, such as of hard plastic. Elastomeric sheet 90 may be molded with hill key 12 and valley key 14 features, with standoffs 92 formed by rigid inserts. In this example the valley key 14 is predominately concave or flat, rather that convex. While the rest of the structure is similar with that of Figure 20a, the principle of operation of this example is different. In Figure 21b the finger, which contacts the two adjacent hill keys 12, but not the central valley key 14, transmits force through the rigid member 84 to the actuator 86 above the snap dome 50 associated with the valley key 14. During deflection, the standoff 92 may be configured to maintain a distance between the region of the sheet 90 that corresponds with the valley key 14 and the PCB 30. Due to the relatively short stroke involved (on the order of 0.15 - 0.45 mm), the deflection forces within sheet 92 are low. In Figure 21 c, the finger presses hill key 12 directly and thereby tilts the pivoting structure 84. Standoff 92 places a greater force on sheet 92 because the travel is higher, but also serves to reduce the force placed upon the snap dome 50 associated with valley key 14. This is advantageous when the valley keys 14 are depressed more frequently and lower force actuation levels are desired.

A number of embodiments of the invention have been described. Nevertheless, it will be understood that various modifications may be made without departing from the scope of the invention. Accordingly, other embodiments are within the scope of the following claims.

## Claims

1. A keypad defining both:
exposed independent keys (12) locally raised with respect to a surface of the keypad, and referred to as hill keys; and
exposed combination keys (14) locally recessed with respect to adjacent hill keys, and referred to as valley keys,
wherein at least many of the hill keys (12) are each associated with a corresponding hill key (12), such that adjacent pairs of the hill keys (12) and connecting regions (37) form elongated dual keys (16), and such that both hill keys (12) in each pair function, either individually or together to provide a common output,
wherein the dual keys (16) are disposed in alternating rows separated by rows of valley keys (14), and
wherein the valley keys (14) provide an output based at least in part on a combined manipulation of two or more adjacent dual keys (16).

2. The keypad of claim 1 wherein the connecting region (37) is in the form of a locally elevated bridge.

3. The keypad of claim 2 wherein the bridge narrows, as viewed normal to the keypad, to form a waist (38) between the adjacent hill keys (12).

4. The keypad of claim 2 or claim 3 wherein the bridge slopes downward toward its midpoint to form a saddle (36) between the adjacent hill keys (12).

5. The keypad of any of claims 1 through 4 wherein at least many of the dual keys (16) have left sides (32) and right sides (34) with different identifying labels.

6. The keypad of any of claims 1 through 5 wherein the dual keys (16) overlay electrical traces (28) of a circuit board (30) and are associated with conductive actuators (40) normally spaced apart from the electrical traces (28) and brought into electrical contact with the traces when their associated hill keys (12) are depressed.

7. The keypad of claim 6 wherein each dual key (16) is associated with only one, elongated actuator (40).

8. The keypad of claim 7 wherein the elongated actuator (40) has a lower surface curved along its length.

9. The keypad of any of claims 6 through 8 wherein each dual key (16) is associated with only one, elongated tactile feedback element (48).

10. The keypad of claim 6 wherein at least many dual keys (16) are each associated with a pair of actuators (40), each of the pair of actuators underlying one of the pair of hill keys (12) of the dual key (16).

11. The keypad of claim 10 wherein both of the actuators (40) of the pair of actuators are arranged to engage a single electrical trace (28) of the circuit board (30).

12. The keypad of claim 10 wherein each of the actuators (40) of the pair of actuators is arranged to engage a different electrical trace (28) of the circuit board (30).

13. The keypad of any of claims 10 through 12 wherein at least many dual keys (16) are each associated with a pair of tactile feedback elements (48), each of the pair of feedback elements underlying one of the pair of hill keys (12) of the dual key (16).

14. The keypad of any of claims 1 through 13 wherein each dual key (16) is configured as a rigid key structure (80) displaceable as a unit with respect to an underlying circuit board (30).

15. The keypad of claim 14 wherein the rigid key structure (80) of each dual key (16) also spans at least one adjacent valley key (14).

16. The keypad of claim 15 wherein the rigid key structures (80) forming at least several of the dual keys (16) also span two adjacent valley keys (14), one on either side of the dual key (16).

17. The keypad of any of claims 1 through 16 wherein adjacent pairs of valley keys (14) are structurally linked such that displacing one of the valley keys (14) of the pair of valley keys toward an underlying circuit board (30) displaces the other of the valley keys (14) of the pair of valley keys away from the circuit board.

18. The keypad of claim 17 wherein each pair of valley keys (14) includes a lever spanning the pair of valley keys and pivotable about a pivot point (86) between the spanned valley keys (14).

19. The keypad of claim 18 wherein the lever (84) contacts the circuit board (30) at the pivot point (86).

20. The keypad of claim 18 wherein the pivot point (86) contacts a snap dome (50).

21. The keypad of claim 20 wherein snap domes (50) beneath pivot points (86) are configured to provide a higher feedback force than snap domes (50) associated with hill keys (12).

22. The keypad of any of claims 1 through 14 further comprising pivotable members (84) each spanning two hill keys (12) of different dual keys (16), and a valley key (14), such that displacing one of the spanned hill keys (12) toward an underlying circuit board (30) displaces the other of the spanned hill keys (12) away from the circuit board.

23. The keypad of any of the above claims wherein exposed surfaces of the valley keys (14) are convex.

24. The keypad of any of claims 1 through 23 wherein the valley keys (14) comprise locally elevated regions that are recessed with respect to the hill keys (12).

25. The keypad of any of the above claims wherein centers of adjacent valley keys (14) are spaced apart by a distance of less than about six millimeters.

26. The keypad of any of the above claims wherein centers of adjacent valley keys (14) are spaced apart by a distance of about 5.4 millimeters.

27. The keypad of any of the above claims wherein at least many hill keys (12) are each associated with at least six valley keys (14).

28. The keypad of any of the above claims with a row of key labels arranged to read, from left to right, Q-W-E-R-T-Y.

29. The keypad of any of the above claims wherein the hill keys (12) provide a corresponding output when individually pressed, and wherein the valley keys (14) are labeled to correspond with an output that results at least from the simultaneous or near-simultaneous manipulation of a predetermined set of two or more hill keys (12) adjacent the valley key (14).

30. The keypad of any of the above claims wherein only the hill keys (12) provide an electrical response when actuated, the outputs corresponding to labels of the valley keys (14) being derived only from combinations of electrical responses from actuation of adjacent hill keys (12).

31. The keypad of any of the above claims wherein the valley keys (14) are algorithmically associated with adjacent hill keys (12).

32. The keypad of claim 28 wherein key output is determined both from individual switch activation and from combined activation of adjacent switches.

33. An electronic device having a keypad of any of the above claims wherein the hill keys (12) each provide a corresponding output when individually pressed, and wherein the valley keys (14) each provide an output that overrides any simultaneous or near-simultaneous manipulation of any one hill key (12) adjacent the valley key (14).

## Patentansprüche

1. Tastenfeld, festlegend:
freiliegende unabhängige Tasten (12), die in Bezug auf eine Oberfläche des Tastenfeldes örtlich erhöht sind und als Kuppentasten bezeichnet werden, wie auch
freiliegende Kombinationstasten (14), die in Bezug auf benachbarte Kuppentasten örtlich rückversetzt sind und als Senkentasten bezeichnet werden,
wobei wenigstens viele der Kuppentasten (12) jeweils derart einer entsprechenden Kuppentaste (12) zugeordnet sind, dass benachbarte Paare der Kuppentasten (12) und Verbindungsbereiche (37) längliche Doppeltasten (16) bilden, sowie derart, dass beide Kuppentasten (12) in jedem Paar entweder einzeln oder zusammen derart wirken, dass sie eine gemeinsame Ausgabe bereitstellen,
wobei die Doppeltasten (16) in abwechselnden Reihen angeordnet sind, die durch Reihen von Senkentasten (14) getrennt sind, und
wobei die Senkentasten (14) eine Ausgabe basierend wenigstens teilweise auf einer kombinierten manuellen Betätigung von zwei oder mehr benachbarten Doppeltasten (16) bereitstellen.

2. Tastenfeld nach Anspruch 1, bei dem der Verbindungsbereich (37) in Form eines örtlich angehobenen Steges vorliegt.

3. Tastenfeld nach Anspruch 2, bei dem sich der Steg bei einer Betrachtung senkrecht zu dem Tastenfeld derart verengt, dass eine Taillierung (38) zwischen den benachbarten Kuppentasten (12) gebildet ist.

4. Tastenfeld nach Anspruch 2 oder 3, bei dem der Steg derart zu seinem Mittelpunkt hin nach unten abfällt, dass ein Sattel (36) zwischen den benachbarten Kuppentasten (12) gebildet ist.

5. Tastenfeld nach einem der Ansprüche 1 bis 4, bei dem wenigstens viele der Doppeltasten (16) linke Seiten (32) und rechte Seiten (34) mit verschiedenen identifizierenden Beschriftungen aufweisen.

6. Tastenfeld nach einem der Ansprüche 1 bis 5, bei dem die Doppeltasten (16) über elektrischen Leiterbahnen (28) einer Leiterplatte (30) liegen und leitenden Betätigern (40) zugeordnet sind, die im Normalfall von den elektrischen Leiterbahnen (28) beabstandet sind und bei Niederdrücken ihrer zugeordneten Kuppentasten (12) in elektrischen Kontakt mit den Leiterbahnen gebracht werden.

7. Tastenfeld nach Anspruch 6, bei dem jede Doppeltaste (16) nur einem länglichen Betätiger (40) zugeordnet ist.

8. Tastenfeld nach Anspruch 7, bei dem der längliche Betätiger (40) eine untere Oberfläche aufweist, die entlang ihrer Länge gebogen ist.

9. Tastenfeld nach einem der Ansprüche 6 bis 8, bei dem jede Doppeltaste (16) nur einem länglichen tasttechnischen Rückkopplungselement (48) zugeordnet ist.

10. Tastenfeld nach Anspruch 6, bei dem wenigstens viele der Doppeltasten (16) jeweils einem Paar von Betätigern (40) zugeordnet sind, wobei jedes Paar von Betätigern unter dem Paar von Kuppentasten (12) der Doppeltaste (16) liegt.

11. Tastenfeld nach Anspruch 10, bei dem die beiden Betätiger (40) des Paares von Betätigern derart angeordnet sind, dass sie eine einzelne elektrische Leiterbahn (28) der Leiterplatte (30) in Eingriff nehmen.

12. Tastenfeld nach Anspruch 10, bei dem jeder der Betätiger (40) des Paares von Betätigern derart angeordnet ist, dass er eine andere elektrische Leiterbahn (28) der Leiterplatte (30) in Eingriff nimmt.

13. Tastenfeld nach einem der Ansprüche 10 bis 12, bei dem wenigstens viele der Doppeltasten (16) jeweils einem Paar von tasttechnischen Rückkopplungselementen (48) zugeordnet sind, wobei jedes Paar von Rückkopplungselementen unter dem Paar von Kuppentasten (12) der Doppeltaste (16) liegt.

14. Tastenfeld nach einem der Ansprüche 1 bis 13, bei dem jede Doppeltaste (16) als starrer Tastenaufbau (80) ausgebildet ist, der in Bezug auf eine darunter liegende Leiterplatte (30) als eine Einheit verschiebbar ist.

15. Tastenfeld nach Anspruch 14, bei dem der starre Tastenaufbau (80) jeder Doppeltaste (16) zudem wenigstens eine benachbarte Senkentaste (14) überspannt.

16. Tastenfeld nach Anspruch 15, bei dem die wenigstens mehrere der Doppeltasten (16) bildenden starren Tastenaufbauten (80) zudem zwei benachbarte Senkentasten (14), und zwar eine auf jeder Seite der Doppeltaste (16), überspannen.

17. Tastenfeld nach einem der Ansprüche 1 bis 16, bei dem benachbarte Paare von Senkentasten (14) aufbautechnisch derart verbunden sind, dass ein Verschieben von einer der Senkentasten (14) des Paares von Senkentasten hin zu einer darunter liegenden Leiterplatte (30) die andere von den Senkentasten (14) des Paares von Senkentasten von der Leiterplatte wegverschiebt.

18. Tastenfeld nach Anspruch 17, bei dem jedes Paar von Senkentasten (14) einen Hebel umfasst, der das Paar von Senkentasten überspannt und um einen Schwenkpunkt (86) zwischen den überspannten Senkentasten (14) herum verschwenkbar ist.

19. Tastenfeld nach Anspruch 18, bei dem der Hebel (84) die Leiterplatte (30) an dem Schwenkpunkt (86) kontaktiert.

20. Tastenfeld nach Anspruch 18, bei dem der Schwenkpunkt (86) eine Schnappkuppe (50) kontaktiert.

21. Tastenfeld nach Anspruch 20, bei dem Schnappkuppen (50) unter den Schwenkpunkten (86) derart ausgebildet sind, dass sie eine höhere Rückkopplungskraft als die Kuppentasten (12) zugeordneten Schnappkuppen (50) bereitstellen.

22. Tastenfeld nach einem der Ansprüche 1 bis 14, das des Weiteren verschwenkbare Glieder (84) umfasst, von denen jedes zwei Kuppentasten (12) verschiedener Doppeltasten (16) und eine Senkentaste (14) derart überspannt, dass ein Verschieben von einer der überspannten Kuppentasten (12) hin zu einer darunter liegenden Leiterplatte (30) die andere von den überspannten Kuppentasten (12) von der Leiterplatte wegverschiebt.

23. Tastenfeld nach einem der vorhergehenden Ansprüche, bei dem freiliegende Oberflächen der Senkentasten (14) konvex sind.

24. Tastenfeld nach einem der Ansprüche 1 bis 23, bei dem die Senkentasten (14) örtlich angehobene Bereiche umfassen, die in Bezug auf die Kuppentasten (12) rückversetzt sind.

25. Tastenfeld nach einem der vorhergehenden Ansprüche, bei dem Mitten benachbarter Senkentasten (14) um einen Abstand beabstandet sind, der kleiner als ungefähr 6 mm ist.

26. Tastenfeld nach einem der vorhergehenden Ansprüche, bei dem Mitten benachbarter Senkentasten (14) um einen Abstand von ungefähr 5,4 mm beabstandet sind.

27. Tastenfeld nach einem der vorhergehenden Ansprüche, bei dem wenigstens viele der Kuppentasten (12) jeweils wenigstens sechs Senkentasten (14) zugeordnet sind.

28. Tastenfeld nach einem der vorhergehenden Ansprüche mit einer Reihe von Tastenbeschriftungen in einer Anordnung, die sich von links nach rechts als Q-W-E-R-T-Y liest.

29. Tastenfeld nach einem der vorhergehenden Ansprüche, bei dem die Kuppentasten (12), wenn sie einzeln gedrückt werden, eine entsprechende Ausgabe bereitstellen, und bei dem die Senkentasten (14) derart beschriftet sind, dass sie einer Ausgabe entsprechen, die sich wenigstens aus der gleichzeitigen oder nahezu gleichzeitigen manuellen Betätigung bzw. Bedienung einer vorbestimmtem Menge von zwei oder mehr zu der Senkentaste (14) benachbarten Kuppentasten (12) ergibt.

30. Tastenfeld nach einem der vorhergehenden Ansprüche, bei dem bei Betätigung nur die Kuppentasten (12) eine elektrische Reaktion bereitstellen, wobei die Beschriftungen der Senkentasten (14) entsprechenden Ausgaben nur aus Kombinationen elektrischer Reaktionen aus einer Betätigung benachbarter Kuppentasten (12) hergeleitet werden.

31. Tastenfeld nach einem der vorhergehenden Ansprüche, bei dem die Senkentasten (14) benachbarten Kuppentasten (12) algorithmisch zugeordnet sind.

32. Tastenfeld nach Anspruch 28, bei dem eine Tastenausgabe sowohl aus einer einzelnen Schaltbetätigung wie auch aus einer kombinierten Betätigung benachbarter Schalter bestimmt wird.

33. Elektronische Vorrichtung mit einem Tastenfeld nach einem der vorhergehenden Ansprüche, bei dem die Kuppentasten (12), wenn sie einzeln gedrückt werden, jeweils eine entsprechende Ausgabe bereitstellen und bei dem die Senkentasten (14) jeweils eine Ausgabe bereitstellen, die eine beliebige gleichzeitige oder nahezu gleichzeitige manuelle Betätigung einer beliebigen zu der Senkentaste (14) benachbarten Kuppentaste (12) außer Kraft setzt.

## Revendications

1. Pavé de touches définissant à la fois :
des touches indépendantes exposées (12) localement surélevées par rapport à une surface du pavé de touches, et mentionnées comme touches colline ; et
des touches de combinaison exposées (14) localement en creux par rapport à des touches colline adjacentes, et mentionnées comme des touches vallée,
dans lequel au moins beaucoup des touches colline (12) sont chacune associées à une touche colline correspondante (12), de sorte que des paires adjacentes des touches colline (12) et des régions de connexion (37) forment des touches doubles de forme allongée (16), et de sorte que les deux touches colline (12) dans chaque paire fonctionnent, individuellement ou conjointement, pour fournir une sortie commune,
dans lequel les touches doubles (16) sont disposées en rangées alternées séparées par des rangées de touches vallée (14), et
dans lequel les touches vallée (14) fournissent une sortie basée au moins en partie sur une manipulation combinée de deux ou plusieurs touches doubles adjacentes (16).

2. Pavé de touches selon la revendication 1 dans lequel la région de connexion (37) est sous forme de pont localement surélevé.

3. Pavé de touches selon la revendication 2 dans lequel le pont se rétrécit, vu perpendiculairement au pavé de touches, pour former une partie étroite (38) entre les touches colline adjacentes (12).

4. Pavé de touches selon la revendication 2 ou la revendication 3 dans lequel le pont est incliné de haut en bas vers son milieu pour former une selle (36) entre les touches colline adjacentes (12).

5. Pavé de touches selon l'une quelconque des revendications 1 à 4 dans lequel au moins beaucoup des touches doubles (16) ont des côtés gauches (32) et des côtés droits (34) avec des libellés d'identification différents.

6. Pavé de touches selon l'une quelconque des revendications 1 à 5 dans lequel les touches doubles (16) recouvrent des traces électriques (28) d'une carte de circuit (30) et sont associées à des actionneurs conducteurs (40) normalement espacés des traces électriques (28) et mis en contact électrique avec les traces quand on appuie sur leurs touches colline associées (12).

7. Pavé de touches selon la revendication 6 dans lequel chaque touche double (16) est associée à un seul actionneur de forme allongée (40).

8. Pavé de touches selon la revendication 7 dans lequel l'actionneur de forme allongée (40) a une surface inférieure incurvée dans le sens de la longueur.

9. Pavé de touches selon l'une quelconque des revendications 6 à 8 dans lequel chaque touche double (16) est associée à un seul élément de contre-réaction tactile (48) de forme allongée.

10. Pavé de touches selon la revendication 6 dans lequel au moins beaucoup de touches doubles (16) sont chacune associées à une paire d'actionneurs (40), chacun de la paire d'actionneurs étant sous-jacent à la paire de touches colline (12) de la touche double (16).

11. Pavé de touches selon la revendication 10 dans lequel les deux actionneurs (40) de la paire d'actionneurs sont disposés pour entrer en prise avec une seule trace électrique (28) de la carte de circuit (30).

12. Pavé de touches selon la revendication 10 dans lequel chacun des actionneurs (40) de la paire d'actionneurs est disposé pour entrer en prise avec une trace électrique différente (28) de la carte de circuit (30).

13. Pavé de touches selon l'une quelconque des revendications 10 à 12 dans lequel au moins beaucoup de touches doubles (16) sont chacune associées à une paire d'éléments de contre-réaction tactiles (48), chacun de la paire d'éléments de réaction étant sous-jacent à une de la paire de touches colline (12) de la touche double (16).

14. Pavé de touches selon l'une quelconque des revendications 1 à 13 dans lequel chaque touche double (16) est configurée comme une structure de touche rigide (80) pouvant être déplacée comme une unité par rapport à une carte de circuit sous-jacente (30).

15. Pavé de touches selon la revendication 14 dans lequel la structure de touche rigide (80) de chaque touche double (16) englobe aussi au moins une touche vallée adjacente (14).

16. Pavé de touches selon la revendication 15 dans lequel les structures de touches rigides (80) formant au moins plusieurs des touches doubles (16) recouvrent aussi deux touches vallée adjacentes (14), une de chaque côté de la touche double (16).

17. Pavé de touches selon l'une quelconque des revendications 1 à 16 dans lequel des paires adjacentes de touches vallée (14) sont structurellement liées de sorte que le déplacement d'une des touches vallée (14) de la paire de touches vallée vers une carte de circuit sous-jacente (30) éloigne de la carte de circuit l'autre des touches vallée (14) de la paire de touches vallée.

18. Pavé de touches selon la revendication 17 dans lequel chaque paire de touches vallée (14) comprend un levier recouvrant la paire de touches vallée et pivotant autour d'un point pivot (86) entre les touches vallée couvertes (14).

19. Pavé de touches selon la revendication 18 dans lequel le levier (84) entre en contact avec la carte de circuit (30) au point pivot (86).

20. Pavé de touches selon la revendication 18 dans lequel le point pivot (86) entre en contact avec un dôme flexible (50).

21. Pavé de touches selon la revendications 20 dans lequel des dômes flexibles (50) en dessous des points pivots (86) sont configurés pour fournir une force de contre-réaction plus élevée que des dômes flexibles (50) associés aux touches colline (12).

22. Pavé de touches selon l'une quelconque des revendications 1 à 14 comprenant en outre des éléments pivotants (84) recouvrant chacun deux touches colline (12) de touches doubles différentes (16), et une touche vallée (14), de sorte que le déplacement d'une des touches colline couvertes (12) vers une carte de circuit sous-jacente (30) éloigne de la carte de circuit l'autre des touches colline couvertes (12).

23. Pavé de touches selon l'une quelconque des revendications précédentes dans lequel les surfaces exposées des touches vallée (14) sont convexes.

24. Pavé de touches selon l'une quelconque des revendications 1 à 23 dans lequel les touches vallée (14) comprennent des régions localement surélevées qui sont en creux par rapport aux touches colline (12).

25. Pavé de touches selon l'une quelconque des revendications précédentes dans lequel les centres de touches vallée adjacentes (14) sont espacés d'une distance de moins de six millimètres environ.

26. Pavé de touches selon l'une quelconque des revendications précédentes dans lequel les centres de touches vallée adjacentes (14) sont espacés d'une distance de 5,4 millimètres environ.

27. Pavé de touches selon l'une quelconque des revendications précédentes dans lequel au moins beaucoup de touches colline (12) sont chacune associées à au moins six touches vallée (14).

28. Pavé de touches selon l'une quelconque des revendications précédentes avec une rangée de libellés de touches disposés pour lire, de gauche à droite, Q-W-E-R-T-Y.

29. Pavé de touches selon l'une quelconque des revendications précédentes dans lequel les touches colline (12) fournissent une sortie correspondante quand on appuie dessus individuellement, et dans lequel les touches vallée (14) sont libellées pour correspondre à une sortie qui résulte au moins de la manipulation simultanée ou quasi simultanée d'un jeu prédéterminé de deux ou plusieurs touches colline (12) adjacentes à la touche vallée (14).

30. Pavé de touches selon l'une quelconque des revendications précédentes dans lequel seules les touches colline (12) fournissent une réponse électrique quand elles sont activées, les sorties correspondant aux libellés des touches vallée (14) étant obtenues uniquement à partir de combinaisons de réponses électriques provenant de l'activation de touches colline adjacentes (12).

31. Pavé de touches selon l'une quelconque des revendications précédentes dans lequel les touches vallée (14) sont associées de façon algorithmique aux touches colline adjacentes (12).

32. Pavé de touches selon la revendication 28 dans lequel la sortie de touche est déterminée à la fois à partir de l'activation de commutateurs individuels et de l'activation combinée de commutateurs adjacents.

33. Dispositif électronique doté d'un pavé de touches selon l'une quelconque des revendications précédentes, dans lequel les touches colline (12) fournissent chacune une sortie correspondante quand on appuie dessus individuellement, et dans lequel les touches vallée (14) fournissent chacune une sortie qui ignore toute manipulation simultanée ou quasi simultanée d'une touche colline (12) quelconque adjacente à la touche vallée (14).
